# EUROPÄISCHE PATENTANMELDUNG

(11) **EP 0 665 367 A2**
(43) Veröffentlichungstag der Anmeldung: **02.08.1995**
(21) Anmeldenummer: 95104354.6
(22) Anmeldetag: 21.10.1992
(51) Int. Cl.: F02B 51/02, F01N 3/28

(54) **Anordnung eines Katalysators für die Abgabe eines Verbrennungsmotors**

(30) Priorität: 12.11.1991 DE 4137105
(62) Teilanmeldung aus: 92117984.2
(71) Anmelder: Schwäbische Hüttenwerke GmbH, D-73414 Aalen-Wasseralfingen (DE)
(72) Erfinder: Härle, Hans A., D-73441 Bopfingen (DE)
(74) Vertreter: Lorenz, Werner, Dipl.-Ing.

(57) **Zusammenfassung**

Eine Anordnung eines Katalysators für die Abgase eines Verbrennungsmotors, wobei der Katalysatorkörper (9) aus einem Gewebe, Gestrick oder Gewirr aus Metallfasern, Metallspänen, Metalldrähten, Metallpulver oder einer Mischung daraus gebildet ist, die in mehreren Lagen (11) zu einem Paket zusammengepreßt sind, ist im Zylinder (2) des Verbrennungsmotores auf dem Kolbenboden (8) vorgesehen.

## Beschreibung

Die Erfindung betrifft eine Anordnung eines Katalysators für die Abgase eines Verbrennungsmotors.

Aus der DE-OS 37 43 503 ist es bereits bekannt, einen Katalysatorkörper aus einem Gewebe, Gestrick, Gewirr aus Metallfasern, Metallspänen, Metalldrähten oder Metallpulver oder einer Mischung daraus vorzusehen, der in der Abgasleitung bzw. im Auspuffsystem eines Verbrennungsmotores angeordnet ist. Der aus mehreren Lagen bestehende Katalysatorkörper ist dabei durch einen Sintervorgang gebildet.

Aus der DE-OS 39 25 596 ist es bekannt, mehrere Lagen aus Metallfasern oder Metalldrähten durch eine Widerstandsverschweißung zu einem einheitlichen Filterkörper zu verbinden.

Neben Metall als Werkstoff sind auch Katalysatorkörper aus Keramik bekannt. Alle bekannten Katalysatoren haben jedoch den Nachteil, daß sie zu motorfern angeordnet sind. Dies bedeutet, daß sich der Abgasstrom bereits um ca. 150 bis 200 °C abgekühlt hat und dadurch den Konvertierungsgrad zur chemischen Umwandlung der Abgase verringert.

Nachteilig ist weiterhin auch, daß bekannte Katalysatoren Gaskanäle mit einer relativ glatten Oberfläche besitzen, so daß das Gas lediglich laminar durch die Kanäle strömt. Durch eine laminare Strömung wird jedoch nur ein geringer Teil der Abgase mit der katalytischen Beschichtung des Katalysatorkörpers in Verbindung gebracht, was den Konvertierungsgrad ebenfalls weiter negativ beeinflußt.

Der vorliegenden Erfindung liegt daher die Aufgabe zugrunde die vorstehend genannten Nachteile zu beseitigen, insbesondere eine Abgasreinigung mit einem Katalysator zu schaffen, der einen besseren Wirkungsgrad besitzt.

Erfindungsgemäß wird dies durch eine Anordnung eines Katalysators geschaffen, wobei der Katalysatorkörper aus einem Gewebe, Gestrick oder Gewirr aus Metallfasern, Metallspänen, Metalldrähten, Metallpulver oder einer Mischung daraus gebildet ist, im Zylinder auf dem Kolbenboden.

Durch die Integrierung eines Katalysators bereits in den Zylinderraum wird das Abgas mit deutlich höheren Temperaturen durch den Katalysatorkörper geleitet. Dies bedeutet, daß der Wirkungsgrad verbessert wird.

Diese erfindungsgemäße Anordnung ist aufgrund der Materialwahl und der Ausbildung des Katalysatorkörpers in überraschender Weise möglich geworden. So läßt sich z.B. das erfindungsgemäße Gewebe, Gestrick oder Gewirr auf einfache Weise in die verschiedensten Formen bringen. Dies bedeutet, der Katalysatorkörper läßt sich ohne Probleme an die örtlichen Gegebenheiten, insbesondere an Form und Größe des vorhandenen Raumes in dem Zylinder, einpassen. Ein weiterer Vorteil besteht darin, daß ein Katalysatorkörper aus dem genannten Material und dem angegebenen Aufbau sehr kompakt herstellbar ist. Dies gilt insbesondere bei einer Ausbildung aus einem Sintermaterial, wobei der Körper zuerst in der gewünschten Form formgepreßt und anschließend gesintert wird.

Die Anordnung des Katalysatorkörpers auf dem Kolbenboden kann sowohl separat als auch in Verbindung mit einem im Auslaßbereich des Zylinders und/oder im Eingangsbereich des Abgaskrümmers angeordneten Katalysatorkörper kombiniert werden.

Der fest auf dem Kolbenboden angeordnete Katalysatorkörper wird zusammen mit dem Kolben einer hin und hergehenden Bewegung unterworfen. Aufgrund der dabei auftretenden Kompressionen und Dekompressionen des Abgases wird dieses in den Katalysatorkörper bei der Kolbenbewegung hineingepreßt und wieder daraus entfernt. Dies bedeutet, daß bereits vor dem Ausstoßen des Abgases in den Auslaßkrümmer eine Abgasreinigung stattfindet.

Da in diesem Bereich sehr hohe Temperaturen vorherrschen, die auch bereits kurz nach dem Start eines Verbrennungsmotores auftreten, besitzt der erfindungsgemäße Katalysator auch im Anfahrbereich einen sehr guten Wirkungsgrad.

Aufgrund der Kompaktheit des Katalysatorkörpers kann zur Erhöhung des Wirkungsgrades auch noch ohne großen zusätzlichen Aufwand eine Heizeinrichtung vorgesehen werden, die den Katalysator bei Bedarf, insbesondere bei Kaltstart, kurzfristig aufheizen kann.

In vorteilhafter Weise kann das Gewebe, Gestrick oder Gewirr in einer oder mehreren Lagen angeordnet sein.

Eine weitere sehr vorteilhafte und nicht naheliegende Weiterbildung und Ausgestaltung der erfindungsgemäßen Katalysatoranordnung besteht darin, daß das Gewebe, Gestrick oder Gewirr einen Gitterstrukturaufbau aufweist.

Durch den gitterartigen Aufbau werden in den Zwischenräumen bzw. Maschen durchgängige Kanäle gebildet, durch die das Abgas hindurchströmt. Durch die Maschen bzw. die Maschengitter erfolgt eine starke Verwirbelung des Abgases, so daß es zu einer erheblich besseren Kontaktierung mit der katalytisch beschichteten Oberfläche kommt, wodurch der Konvertierungsgrad verbessert wird.

Die Verwirbelung und damit Kontaktierung wird noch besser, wenn man die Maschen von hintereinander angeordneten Lagen versetzt zueinander ordnet. Dabei genügt gegebenenfalls bereits eine geringfügige Versetzung, und zwar dergestalt, daß das Abgas abwechselnd auf einen Gitterdraht auftrifft oder diesen streift, wodurch es zu einer Ablenkung und damit zu einer zusätzlichen Verwirbelung kommt.

Eine Möglichkeit der Bildung eines einheitlichen Katalysatorkörpers kann darin bestehen, daß die einzelnen Lagen durch eine Widerstandsschweißung miteinander verbunden werden.

Eine sehr vorteilhafte Ausgestaltung kann darin bestehen, daß die einzelnen Lagen paketiert einem Sintervorgang unterworfen werden.

Eine weitere Verbesserung des Konvertierungsgrades durch eine Oberflächenvergrößerung und/oder eine zusätzliche Einbringung von katalytisch wirkendem Material kann dadurch erreicht werden, daß die Lagen mit Spänen, kleinen Drahtstücken, Fasern, Pulver oder dergleichen dotiert sind, die mit den Fasern, Spänen oder Drähten des Gewebes, Gestrickes oder Gewirres verbunden sind.

Besonders vorteilhaft läßt sich hierfür spratziges Pulver verwenden, das eine deutliche Oberflächenvergrößerung ergibt.

Alternativ hierzu oder kombiniert mit einer Dotierung des Gewebes, Gestrickes oder Gewirres mit Zusatzmaterialien kann der Katalysatorkörper auch abschließend in ein Tauchbad eingebracht werden. Das Tauchbad besteht aus einem Brei bzw. einer Suspension aus Teilchen aus Metall, Keramik, Kunststoff oder ähnlichem. Nach dem Abtropfen wird die zusätzliche Schicht gehärtet oder einem Sinterprozeß unterworfen. Ein ähnliches Verfahren ist auch als "Wash-Coat-Verfahren" bekannt.

Nachfolgend sind anhand der Zeichnung Ausführungsbeispiele der Erfindung prinzipmäßig dargestellt.

Es zeigt:
- Fig. 1: einen Schnitt durch den oberen Teil eines Verbrennungsmotores mit mehreren erfindungsgemäßen Anordnungen eines Katalysatorkörpers;
- Fig. 2: ausschnittsweise eine vergrößerte Darstellung des erfindungsgemäßen Katalysatorkörpers;
- Fig. 3: eine perspektivische Darstellung einer aus mehreren Lagen gebildeten Einheit eines Katalysatorkörpers; und
- Fig. 4: einen Schnitt durch einen Katalysatorkörper, der durch eine Widerstandsverschweißung gebildet ist.

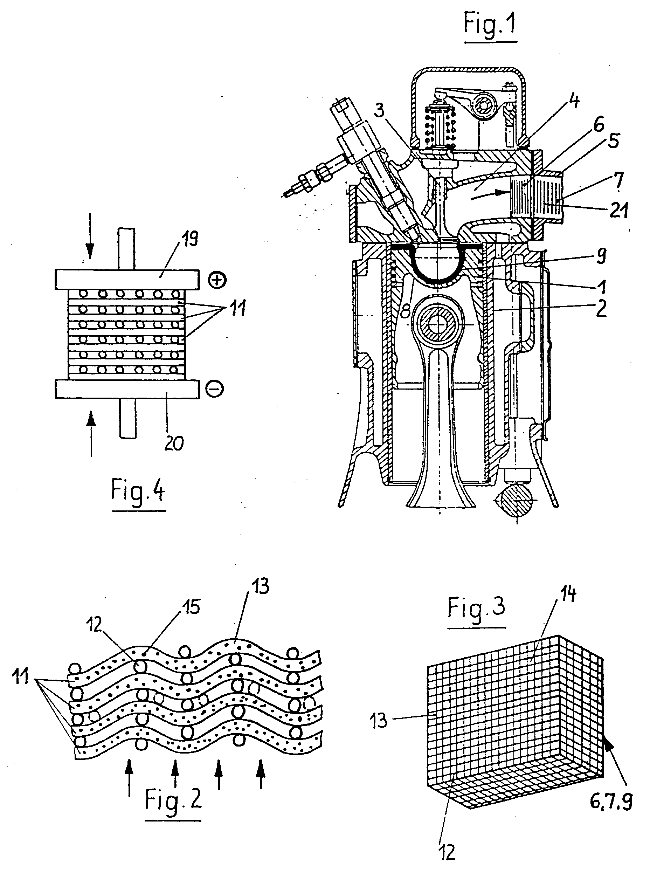

In der Fig. 1 ist prinzipmäßig der obere Bereich eines Verbrennungsmotores mit einem Kolben 1, der in bekannter Weise in einem Zylinder 2 Hub- und Senkbewegungen ausführt, dargestellt. Der Aufbau eines Verbrennungsmotores ist allgemein bekannt, weshalb hier nicht näher darauf eingegangen wird. Ein Auslaßventil 3 schließt einen Auslaßbereich 4 im Zylinder 2 ab bzw. gibt diesen entsprechend gesteuert zum Ausstoßen von Abgas frei. An den Auslaßbereich 4 schließt sich ein Abgaskrümmer 5 an.

Wie ersichtlich ist ein Katalysatorkörper 6 im Auslaßbereich 4 und ein weiterer Katalysatorkörper 7 im Eingangsbereich des Auslaßkrümmers 5 angeordnet. Auf den gekrümmten Kolbenboden 8 des Kolbens 1 ist ein entsprechend gekrümmter Katalysatorkörper 9 aufgebracht.

Zur Vereinfachung sind in der Fig. 1 drei Möglichkeiten der Anordnung eines Katalysatorkörpers aufgezeigt. Neben dieser Darstellungsform sind selbstverständlich auch noch andere Kombinationsmöglichkeiten gegeben. So kann z.B. der Katalysatorkörper 6 oder 7 alleine in Verbindung mit dem Katalysatorkörper 9 vorgesehen sein. Ebenso können die Katalysatorkörper 6 und 7 auch gemeinsam oder alleine vorgesehen sein.

Der Aufbau des Katalysatorkörpers ist aus den Fig. 2 und 3 deutlicher ersichtlich. Wie dargestellt ist er aus mehreren Lagen 11 aus einem Gewirr von sich kreuzenden Drähten oder Fasern 12 und 13 gebildet. Jede Lage 11 besteht dabei aus einer Vielzahl von Längsdrähten oder Fasern 12, die mit quer dazu verlaufenden Drähten oder Fasern 13 verbunden sind. Zur Erhöhung der Oberfläche und der Stabilität können die Drähte 11, 13 auch wellenförmig verlaufen.

Aus der Fig. 3 ist ersichtlich, daß durch diese Ausgestaltung eine gitterartige bzw. wabenartige Struktur mit einer Vielzahl von Maschen 14 gebildet wird, durch die das Abgas strömt.

Bei der Strömung des Abgases gemäß Pfeilrichtung der Fig. 2 erfolgt eine entsprechende Verwirbelung durch die Drähte bzw. Fasern 12 und 13. Diese Verwirbelung und damit bessere Kontaktierung mit den katalytisch beschichteten Drähten oder Fasern 12, 13 wird noch erhöht, wenn hintereinanderliegende Drähte 12 versetzt zueinander angeordnet sind (siehe gestrichelte Darstellung).

Zur Oberflächenvergrößerung und zur Erhöhung der katalytischen Wirksamkeit können die einzelnen Lagen auch noch mit Partikeln in Form von kleinen Spänen, kleinen Fasern oder groben Pulvern 15 dotiert werden (teilweise in der Fig. 2 dargestellt).

Diese Dotierung kann z.B. durch ein Einrütteln, durch ein Mittel in flüssiger Form als Trägersubstanz, in der die Partikel aufgenommen sind, oder dergleichen erfolgen, wonach die Verbindung durch einen Sintervorgang oder durch eine Widerstandsverschweißung mit den Drähten, Fasern 12, 13 erfolgt.

Die Herstellung des erfindungsgemäßen Katalysatorkörpers kann in bekannter Weise durch einen Sintervorgang der übereinander gelegten Drähte und Lagen erfolgen, die entsprechend gepreßt und in bekannter Weise in einem Sintervorgang miteinander verbunden werden.

Der Katalysatorkörper kann auch in einer Ausführungsform hergestellt sein, in der die einzelnen Lagen übereinander gelegt und durch eine Klammereinrichtung mit einer Oberplatte und einer Unterplatte mechanisch zusammengepreßt und so gehalten werden.

Statt einer einfachen mechanischen Zusammenpressung der einzelnen Lagen 11 des Katalysatorkörpers können die einzelnen Lagen auch durch eine Widerstandsverschweißung zwischen zwei Elektroden 19 und 20 zu einer massiven Einheit miteinander verbunden werden. Das Widerstandsverschweißungsverfahren ist allgemein bekannt, weshalb hier nachfolgend ebenfalls nicht näher darauf eingegangen wird.

Als Material zur Bildung des Katalysatorkörpers aus den Metallfasern, Metallspänen, Metalldrähten, Metallpulver oder einer Mischung daraus sind z.B. folgende Materialien geeignet:
1. Werkstoffe einer intermetallischen (intensive Mischung) Phase, wie Ni₃Al, NiAl, Ti₃Al, TiAl, Mg₂Si, Al₃Mg, MnZr₂, Ti₅Si₃.
2. Stähle mit einem 17-26% Cr, Ni 3-37%, Si 0,7-2,5%; C < 0,1 %; Mn 1-2 %, P ≦ 0,03 %; S ≦ 0,02 %, Al 0,7-6 % Gehalt.
3. Stähle:
   a) 18,5 % Cr; 9,5 % Ni, N 0,15 %, Si 1,3 %, C < 0,06 %, und geringe Menge von seltenen Erdmetallen, vorwiegend Cerium.
   b) 21 % Cr, 11 % Ni, 1,7 % Si, C < 0,1 %, N 0,17 % und seltene Erdmetalle, vorwiegend Cerium.
   c) 25 % Cr; 35 % Ni, 1,5 % Si, C < 0,05 % und seltene Erdmetalle, vorwiegend Cerium.

Als Dotierungspartikel für die einzelnen Lagen 11 können folgende Materialien verwendet werden:
1. Materialien analog dem Grundmaterial.
2. Leichtmetalloxyde wie AlₓO_{y}, Siₓo_{y}: z.B Al₂O₃, SiO₂, oder SiTiO₃, AlTiO₅, SiO₂, ZrO₂, SiC, TiO₂, BaTiO₃, Si₃N₄, Cr₂O₃.

Die vorgenannten Materialen können einzeln oder in Mischungen verwendet werden. Zusätzlich können noch Kohlenstoffasern und/oder Kohlenstoffpartikel beigemischt oder auch alleine verwendet werden.

Die Verwendung von Aluminium hat den Vorteil, daß sich dieses an der Oberfläche abscheidet und dort eine sehr korrosionsfeste Schicht bildet. Weiterhin hat sich herausgestellt, daß es ein gutes "Verankerungsmittel" für eine zusätzliche Schicht bilden kann, wie z.B. bei einer zusätzlichen Aufbringung von Teilchen in einem Tauchbad.

Weiterhin können die Dotierungspartikel auch als Einlagen von katalytischen Materialien, wie z.B. die Leichtmetalloxyde, dienen.

Eine Zugabe von Kohlenstoffasern und/oder Kohlenstoffpartikeln entweder allein oder in Mischung mit anderen Partikeln zur Dotierung des Katalysators bringt eine weitere Erhöhung der Hitzebeständigkeit, die ja gerade in dem gewählten Bereich entscheidend ist. Die Kohlenstoffasern und/oder Kohlenstoffpartikeln können dabei das einzige Dotierungsmaterial darstellen oder mit den vorstehend genannten Materialien als Mischung aufgebracht werden.

In einer sehr vorteilhaften Weise lassen sich keramische Fasern, z.B. Aluminiumoxydfasern, in den Katalysatorkörper einfügen. Derartige Fasern vermindern die Wärmeabfuhr und bringen damit eine noch schnellere Temperaturerhöhung des Katalysators im Kaltstartbetrieb des Motores auf die erforderliche Reaktionstemperatur. Darüberhinaus haben diese Fasern den Vorteil, daß sie auch die mechanische Beanspruchung verbessern.

Zur Erhöhung der Wirksamkeit des Katalysatorkörpers können ein oder mehrere Heizstäbe 21 oder Heizgitter, wie schematisch in den Katalysatorkörpern 6 und 7 dargestellt, in den Katalysatorkörper eingeschoben werden (siehe Prinzipdarstellung in der Fig. 1).

## Patentansprüche

1. Anordnung eines Katalysators für die Abgase eines Verbrennungsmotors, wobei der Katalysatorkörper (9) aus einem Gewebe, Gestrick oder Gewirr aus Metallfasern, Metallspänen, Metalldrähten, Metallpulver oder einer Mischung daraus gebildet ist, im Zylinder (2) auf dem Kolbenboden (8).

2. Anordnung nach Anspruch 1,
**dadurch gekennzeichnet,** daß das Gewebe, Gestrick oder Gewirr in einer oder mehreren Lagen angeordnet ist.

3. Anordnung nach Anspruch 1 oder 2,
**dadurch gekennzeichnet,** daß das Gewebe, Gestrick oder Gewirr einen Gitterstrukturaufbau aufweist.

4. Anordnung nach Anspruch 3,
**dadurch gekennzeichnet,** daß die Gittermaschen (14) von hintereinander angeordneten Lagen (11) versetzt zueinander angeordnet sind.

5. Anordnung nach Anspruch 3 oder 4,
**dadurch gekennzeichnet,** daß die Maschenweite 0,5 bis 5 mm, vorzugsweise 1 bis 2 mm beträgt.

6. Anordnung nach einem der Ansprüche 1 bis 5,
**dadurch gekennzeichnet,** daß die Drähte oder Fasern (12,13) einer Lage (11) wenigstens annähernd eine Wellenform aufweisen.

7. Anordnung nach einem der Ansprüche 1 bis 6,
**dadurch gekennzeichnet,** daß die einzelnen Lagen (11) durch eine Widerstandsverschweißung miteinander verbunden sind.

8. Anordnung nach einem der Ansprüche 1 bis 6,
**dadurch gekennzeichnet,** daß die einzelnen Lagen (11) paketiert einem Sintervorgang unterworfen werden.

9. Anordnung nach einem der Ansprüche 1 bis 8,
**dadurch gekennzeichnet,** daß die Lagen (11) mit Spänen, kleinen Drahtstücken, Fasern (15) oder dergleichen dotiert sind, die mit den Fasern, Spänen oder Drähten (12,13) des Gewebes, Gestrickes oder Gewirres verbunden sind.

10. Anordnung nach Anspruch 9,
**dadurch gekennzeichnet,** daß spratziges Pulver (15), das katalytische Eigenschaften besitzt, vorgesehen ist.

11. Anordnung nach Anspruch 9 oder 10,
**dadurch gekennzeichnet,** daß die Verbindung der Späne, kurzer Drahtstücke, Fasern oder des Pulvers (15) mit den Fasern, Spänen oder Drähten (12,13) des Gewebes, des Gestrickes oder Gewirres durch Widerstandsverschweißung oder Versinterung erfolgt.

12. Anordnung nach einem der Ansprüche 1 bis 11,
**dadurch gekennzeichnet,** daß der Katalysatorkörper (6,7,9) in einem Tauchbad mit die Oberfläche des Katalysatorkörpers (6,7,9) vergrößernden Teilchen versehen wird.

13. Anordnung nach einem der Ansprüche 1 bis 12,
**dadurch gekennzeichnet,** daß das Material für den Katalysatorkörper Werkstoffe einer intermetallischen (intensive Mischung) Phase wie Ni₃Al, NiAl, Ti₃Al, TiAl, Mg₂Si, Al₃Mg, MnZr₂, Ti₅Si₃ aufweist.

14. Anordnung nach einem der Ansprüche 1 bis 12,
**dadurch gekennzeichnet,** daß das Material für den Katalysatorkörper Stähle mit 17-26 % Cr, Ni 3-37 %, Si 0,7-2,5 %; C < 0,1 %; Mn 1-2 %, P ≦ 0,03 %; S ≦ 0,02 %, Al 0,7-6 % Gehalt aufweist.

15. Anordnung nach einem der Ansprüche 1 bis 12,
**dadurch gekennzeichnet,** daß das Material für den Katalysatorkörper Stähle mit 18,5 % Cr, 9,5 % Ni, N 0,15 %, Si 1,3 %, C < 0,06 %, und geringe Mengen von seltenen Erdmetallen, vorwiegend Cerium aufweist.

16. Anordnung nach einem der Ansprüche 1 bis 12,
**dadurch gekennzeichnet,** daß das Material für den Katalysatorkörper Stähle mit 21 % Cr, 11 % Ni, 1,7 % Si, C < 0,1 %, N 0,17 % und seltene Erdmetalle, vorwiegend Cerium aufweist.

17. Anordnung nach einem der Ansprüche 1 bis 12,
**dadurch gekennzeichnet,** daß das Material für den Katalysatorkörper Stähle mit 25 % Cr; 35 % Ni, 1,5 % Si, C < 0,05 % und seltene Erdmetalle, vorwiegend Cerium aufweist.

18. Anordnung nach einem der Ansprüche 1 bis 17,
**dadurch gekennzeichnet,** daß als Dotierungspartikel Metalle, Metalloxyde, Keramik, Kunststoffe oder eine Mischung daraus vorgesehen ist.

19. Anordnung nach Anspruch 18,
**dadurch gekennzeichnet,** daß katalytisch wirkende Partikel, wie Cr, Va, Mo, Mn, Pt, Rh, Pd, Ti, Si jeweils einzeln oder in Mischung vorgesehen sind.

20. Anordnung nach Anspruch 18,
**dadurch gekennzeichnet,** daß Al₂O₃, SiTiO₃, AlTiO₅, SiO₂, ZrO₂, SiC, TiO₂, BaTiO₃, Si₃N₄, Cr₂O₃ jeweils einzeln oder in Mischung vorgesehen sind.

21. Anordnung nach einem der Ansprüche 1 bis 20,
**dadurch gekennzeichnet,** daß als Dotierungspartikel Kohlenstoffasern und/oder Kohlenstoffpartikel alleine oder in Mischung zugegeben sind.

22. Anordnung nach einem der Ansprüche 1 bis 20,
**dadurch gekennzeichnet,** daß als Dotierungspartikel keramische Fasern, insbesondere Aluminiumoxidfasern, alleine oder in Mischung zugegeben sind.
